# EUROPEAN PATENT APPLICATION

(11) **EP 4 376 125 A1**
(43) Date of publication of application: **29.05.2024**
(21) Application number: 22954176.8
(22) Date of filing: 09.08.2022
(51) Int. Cl.: H01M 4/36, H01M 4/525, H01M 10/0525

(54) **POSITIVE ELECTRODE ACTIVE MATERIAL, POSITIVE ELECTRODE SHEET, ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: PAN, Jianfu, Ningde, Fujian 352100 (CN); XU, Xiaofu, Ningde, Fujian 352100 (CN); ZHANG, Xinyu, Ningde, Fujian 352100 (CN); SHANG, Yibo, Ningde, Fujian 352100 (CN); LIU, Qian, Ningde, Fujian 352100 (CN)
(74) Representative: von Tietzen und Hennig, Nikolaus
(86) International application number: PCT/CN2022/111217
(87) International publication number: WO 2024/031351

(57) **Abstract**

The present disclosure discloses a positive electrode active material, a positive electrode plate, an electrode assembly, a battery cell, a battery, and an electrical apparatus, wherein the positive electrode active material comprises a low-to-medium nickel ternary material and a high-lattice-volume-change positive electrode material. The low-to-medium nickel ternary material has a mass ratio W1≥45% in the positive electrode active material. The high-lattice-volume-change positive electrode material satisfies: the thickness change rate of the positive electrode active substance layer is ≥2.6%, and the thickness change rate is (H₁-H₂)/H₁, wherein H₁ is the fully discharged thickness of the positive electrode active substance layer, and H₂ is the fully charged thickness of the positive electrode active substance layer. In an embodiment of the present disclosure, in cases where the low-to-medium nickel ternary material is used as the main material of the positive electrode active material, the high-lattice-volume-change positive electrode material with a specific standard is added to the positive electrode active material, thereby effectively improving the cyclic expansion force performance of the battery cell and effectively increasing the cycle life of the battery cell.

## Description

### Technical Field

The present disclosure relates to the field of batteries, and more specifically, to a positive electrode active material, a positive electrode plate, an electrode assembly, a battery cell, a battery, and an electrical apparatus.

### Background Art

In some existing battery cell designs, in order to optimize the resistance to electric potential of the positive electrode plates, a low-to-medium nickel ternary material is used as the main component of the positive electrode active material in the positive electrode active substance layer of the positive electrode plates. However, battery cells in this designed form typically suffer from poor cyclic expansion force performance and short cycle life.

### Summary

In view of the above problems, the present disclosure provides a positive electrode active material, a positive electrode plate, an electrode assembly, a battery cell, a battery, and an electrical apparatus, which can effectively improve the cyclic expansion force performance of the battery cell and effectively increase the cycle life of the battery cell in cases where the low-to-medium nickel ternary material is used as the main material of the positive electrode active material.

The embodiments of the present disclosure are realized like this.

In the first aspect, the present disclosure provides a positive electrode active material, comprising a low-to-medium nickel ternary material and a high-lattice-volume-change positive electrode material. The mass ratio W1 of the low-to-medium nickel ternary material in the positive electrode active material is W1≥45%, wherein the low-to-medium nickel ternary material is LiNiₓCo_{y}M1_{1-x-y}O₂, 0.5≤x≤0.69, y>0, and 1-x-y>0, and M1 is selected from one or more of Al, Mn, Mg, Nb, Ti, and Ba. The high-lattice-volume-change positive electrode material is satisfied that the thickness change rate of the positive electrode active substance layer is ≥2.6%, wherein the thickness change rate is (H₁-H₂)/H₁, wherein H₁ refers to the thickness of the positive electrode active substance layer that is fully discharged, and H₂ refers to the thickness of the positive electrode active substance layer that is fully charged.

In the technical solution of the embodiments of the present disclosure, in cases where the low-to-medium nickel ternary materials is the main component, high-lattice-volume-change positive electrode materials are added for compounding, and high-lattice-volume-change cathode materials are required according to the standard of the thickness change rate of the positive electrode active substance layer being ≥2.6%, so as to make the positive electrode active material have an overall better cyclic expansion force performance, so that the cyclic expansion force performance and the cycle life of the battery cell can be improved effectively.

In some embodiments, the high-lattice-volume-change positive electrode material includes one or more of a high nickel ternary material and a polyanion-type positive electrode material. The high nickel ternary material is LiNiₘCoₙN₁₋ₘ₋ₙO₂, wherein 0.7≤m<1, and N is selected from one or more of Al, Mn, Mg, and Ba. The polyanion-type positive electrode material is a lithium iron phosphate material or lithium manganese phosphate material. In the embodiment, the high-lattice-volume-change positive electrode material has specific compositions, so as to enable the high-lattice-volume-change positive electrode material to have a suitable lattice volume change rate and better ensure the overall cyclic expansion force performance of the positive electrode active material, thereby more effectively improving the cyclic expansion force performance of the battery cell and effectively increasing the cycle life of the battery cell.

In some embodiments, the chemical formula of the lithium iron phosphate material is LiFe_{α}M2_{β}PO₄, wherein α+β=1, 0.2≤α≤1, 0≤β≤0.8, and M2 is selected from one or more of Ti, Mg, V, Cr, Zr, Nb, and W. In this embodiment, the lithium iron phosphate material has a specific elemental composition, in this case, the lithium iron phosphate material is contained in the high-lattice-volume-change positive electrode material, so as to enable the high-lattice-volume-change positive electrode material to have a suitable lattice volume change rate, which better ensures the cyclic expansion force performance of the overall positive electrode active material, thereby improving the cyclic expansion force performance of the battery cell more effectively and increasing the cyclic life of the battery cell effectively.

In some embodiments, the lithium manganese phosphate material has the chemical formula of Li₁₊ₑMn_{1-f}A_{f}P_{1-g}R_{g}O₄, wherein 0.1≤e<1, 0.001≤f≤0.5, 0.001≤g≤0.1, A is selected from one or more of Zn, Al, Na, K, Mg, Mo, W, Ti, V, Zr, Fe, Ni, Co, Ga, Sn, Sb, Nb, and Ge, and R is selected from one or more of B, Si, N, S, F, Cl, and Br. Optionally, A is selected from one or more of Fe, Ti, V, Ni, Co, and Mg. Optionally, R is selected from one or more of B, Si, N, and S. In this embodiment, the lithium manganese phosphate material has a specific elemental composition, and in cases where the lithium manganese phosphate material is contained in the high-lattice-volume-change positive electrode material, the high-lattice-volume-change positive electrode material is made to have a suitable lattice volume change rate to better ensure the overall cyclic expansion force performance of the positive electrode active material, thereby improving the cyclic expansion force performance of the battery cell more effectively and improving the cyclic life of the battery cell effectively.

In some embodiments, the surface of the polyanion-type positive electrode material is provided with one or more electrically conductive cladding layers; optionally, each electrically conductive cladding layer contains one of pyrophosphate, phosphate, and carbon. In this embodiment, one or more electrically conductive cladding layers are provided on the surface of the polyanion-type positive electrode material, such that the polyanion-type positive electrode material has better stability and electrical conductivity.

In some embodiments, the positive electrode active material consists of a low-to-medium nickel ternary material and a high nickel ternary material, wherein the mass percentage W2 of high nickel ternary material in the positive electrode active material satisfies 0<W2≤50%. Optionally, 10%<W2≤40%. In this embodiment, the low-to-medium nickel ternary materials and the high nickel ternary materials are used to form the positive electrode active material, and these two are controlled in accordance with an appropriate ratio, which better ensures the cyclic expansion force performance of the overall positive electrode active material, thereby more effectively improving the cyclic expansion force performance of the battery cell and effectively increasing the cycle life of the battery cell.

In some embodiments, the positive electrode active material consists of a low-to-medium nickel ternary material and a polyanion-type positive electrode material, and the mass percentage W3 of the polyanion-type positive electrode material in the positive electrode active material satisfies: 0<W3≤50%; optionally, 10%<W3≤30%. In this embodiment, the low-to-medium nickel ternary material and the polyanion-type positive electrode material are used to form the positive electrode active material, and the two are controlled in accordance with an appropriate ratio, which better ensures the cyclic expansion force performance of the overall positive electrode active material, thereby more effectively improving the cyclic expansion force performance of the battery cell and effectively increasing the cycle life of the battery cell.

In some embodiments, the positive electrode active material consists of a low-to-medium nickel ternary material, a high nickel ternary material, and a polyanion-type positive electrode material, wherein 50%≤W1<100%. Optionally, the mass percentage W2 of the high nickel ternary material in the positive electrode active material satisfies 0<W2≤40%. The mass percentage W3 of the polyanion-type positive electrode material in the positive electrode active material satisfies: 5%≤W3≤30%. In this embodiment, the positive electrode active material comprises the low-to-medium nickel ternary materials, the high nickel ternary materials and the polyanion-type positive electrode materials, and these three are controlled according to a suitable ratio, which better ensures the cyclic expansion force performance of the overall positive electrode active material, thereby improving the cyclic expansion force performance of the battery cell more effectively and increasing the cyclic life of the battery cell effectively.

In the second aspect, the present disclosure provides a positive electrode plate, comprising a positive electrode current collector and a positive electrode active substance layer disposed on at least one side of the positive electrode current collector, wherein the material of the positive electrode active substance layer comprises the positive electrode active material as mentioned in the above embodiments.

In the third aspect, the present disclosure provides an electrode assembly, comprising a positive electrode plate as mentioned in the above embodiments.

In the fourth aspect, the present disclosure provides a battery cell, comprising a housing and an electrode assembly in the above embodiments, wherein the electrode assembly is accommodated in the housing.

In the fifth aspect, the present disclosure provides a battery, comprising a case body and a plurality of battery cells in the above embodiments, wherein the plurality of battery cells are accommodated in the case body.

In the sixth aspect, the present disclosure provides an electrical apparatus, comprising battery cells in the above embodiments or a battery in the above embodiments.

The above description is only an overview of the technical solution of the present disclosure, in order to be able to more clearly understand the technical means of the present disclosure, to implement it in accordance with the contents of the specification, and to make the above and other purposes, features and advantages of the present disclosure more obvious and easy to understand, the following specific embodiments of the present disclosure are listed.

### Brief Description of Drawings

In order to more clearly illustrate the technical solutions of the embodiments of the present disclosure, the drawings to be used in the embodiments will be briefly introduced below. It should be understood that the following drawings only show some embodiments of the present disclosure, and therefore should not be regarded as a limitation of the scope of the present disclosure, and other relevant drawings can be obtained from these drawings by a person of ordinary skill in the art without inventive effort.
Fig. 1 is a schematic view of a structure of a vehicle provided by some embodiments of the present disclosure;
Fig. 2 is an exploded view of a battery provided by some embodiments of the present disclosure;
Fig. 3 is an exploded view of the battery cell shown in Fig. 2;
Fig. 4 is a schematic view of a partial structure of the electrode assembly provided by some embodiments of the present disclosure;
Fig. 5 is a schematic view of a partial structure of a positive electrode plate provided by some embodiments of the present disclosure; and
Fig. 6 is the data of cycling capacity retention rate and the test of the number of cycles of battery cell provided by some embodiments and control group of the present disclosure.

### Reference numerals:

1000-vehicle;
100-battery; 200-controller; 300-motor;
10-case body; 11-first portion; 12-second portion; 13-accommodating space;
20-battery cell; 21-housing; 22-electrode assembly; 23-electrode terminal; 24-pressure relief structure;
211-housing body; 212-cover body; 213-sealing space; 221-positive electrode plate; 222-negative electrode plate; 223-separator;
2211-positive electrode current collector; 2212-positive electrode active substance layer;
2221-negative electrode current collector; 2222-negative electrode active substance layer.

### Detailed Description of Embodiments

In order to make the purpose, technical solutions, and advantages of the embodiments of the present disclosure clearer, the technical solutions in the embodiments of the present disclosure will be described clearly and completely below. In cases where specific conditions are not indicated in the embodiments, conventional conditions or conditions recommended by the manufacturer are followed. The reagents or instruments used without indication of the manufacturer are all conventional products that can be purchased commercially.

Embodiments of the technical solutions of the present disclosure will be described in detail below in conjunction with the drawings. The following embodiments are intended only to illustrate more clearly the technical solutions of the present disclosure, and therefore, are intended only as examples rather than limiting the scope of protection of the present disclosure.

Unless otherwise defined, all technical and scientific terms used herein have the same meaning as what is commonly understood by those of ordinary skill in the art of the present disclosure. The terms used herein are for the purpose of describing specific embodiments only, rather than for limiting the present disclosure. The terms "including" and "having" and any variations thereof, as used in the specification and the claims of the present disclosure, and in the foregoing description of the drawings are intended to indicate non-exclusive inclusion.

In the description of the embodiments of the present disclosure, the technical terms "first", "second" and the like are only used to distinguish different objects, and cannot be understood as indicating or implying relative importance or implicitly specifying an amount, a particular order, or a primary and secondary relationship of the technical features indicated.

In the description of the embodiments of the present disclosure, the technical terms "inside", "outside" and the like indicate an orientation or positional relationship based on the orientation or positional relationship shown in the drawings and are only for the purpose of facilitating the description of the embodiments of the present disclosure and simplifying the description, which are not indicative of or suggestive of the fact that the device or element referred to must be of a particular orientation, or be constructed and operated with a particular orientation, and therefore, cannot to be construed as a limitation of the embodiments of the present disclosure.

In the description of the embodiments of the present disclosure, the technical terms "mount", "connect", "couple", "fix" and the like are to be understood in a broad sense unless expressly specified or limited otherwise, for example, it can be fixedly coupled, removably coupled or integrated, or can be directly connected or indirectly connected via an intermediary medium. For those of ordinary skill in the art, the specific meaning of the above terms in the embodiments of the present disclosure can be understood on a case-by-case basis.

Referring to "embodiments" herein implies that particular features, structures, or characteristics described in conjunction with the embodiments can be included in at least one embodiment of the present disclosure. The occurrence of the phrase at various positions in the specification does not necessarily all refer to the same embodiment, nor is it a separate or alternative embodiment that is mutually exclusive with other embodiments. It is understood by those skilled in the art, both explicitly and implicitly, that the embodiments described herein can be combined with other embodiments.

In embodiments of the present disclosure, the same reference numerals indicate the same components and, for the sake of brevity, detailed descriptions of the same components in different embodiments are omitted. It should be understood that the height, length, width, and other dimensions of the various components of the embodiments of the present disclosure, as well as the overall height, length, width, and other dimensions of the integrated device, as shown in the drawings, are illustrative only and should not constitute any limitation to the present disclosure.

At present, from the perspective of the development of the market, the application of power batteries is increasingly extensive. The power batteries are not only used in energy storage power systems such as hydro, thermal, wind, and solar power stations, but also widely used in electric transportation such as electric bicycles, electric motorcycles, and electric vehicles, as well as military equipment, aerospace, aviation and other fields. As the application field of power batteries is expanding, its market demand is also increasing.

In the existing design of positive electrode active materials, in order to ensure higher energy density, the nickel-cobalt-manganese ternary material with high energy density is usually used as the main component of positive electrode active materials. In the case where the nickel-cobalt-manganese ternary material is the main positive electrode active material, in order to improve the safety performance and cycling performance, lithium manganese phosphate with high safety and nickel-cobalt-manganese ternary material with high energy density is usually compounded to take full complementary advantages of nickel-cobalt-manganese ternary material and lithium manganese phosphate.

The applicant notes that with further research on nickel-cobalt-manganese ternary materials as the main positive electrode active material, in some of the existing designs, in order to optimize the potential resistance capability of the positive electrode plate, a design that adopts low-to-medium nickel ternary materials as the main material of the positive electrode active material is proposed. However, when the existing positive electrode active materials which are mainly of low-to-medium nickel ternary materials are subjected to application, if the low nickel ternary materials are subjected to excessive expansion force during cycling, the cycle life is easy to deteriorate.

In order to solve the above problems, after in-depth research, the applicant has found that adding specifically standard high-lattice-volume-change positive electrode materials to the positive electrode active materials which is mainly of low-to-medium nickel ternary materials can effectively improve the cyclic expansion force performance of the battery cell and effectively increase the cycle life of the battery cell.

For the convenience of explanation, the following embodiment takes a vehicle as an electrical apparatus of an embodiment of the present disclosure as an example for illustrating.

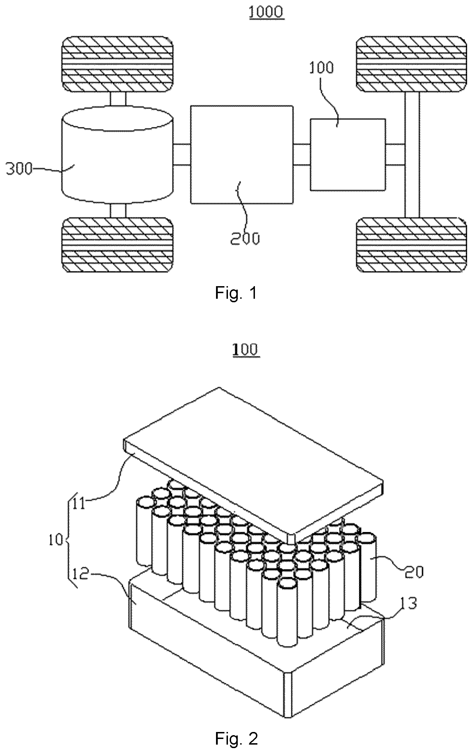

Referring to Fig. 1, Fig. 1 is a structural schematic view of vehicle 1000 provided by some embodiments of the present disclosure. Vehicle 1000 can be fuel vehicles, gas vehicles or new energy vehicles, wherein new energy vehicles can be pure electric vehicles, hybrid power vehicles or range extender vehicles, etc. The battery 100 is provided inside vehicle 1000, wherein the battery 100 can be provided at the bottom, the head, or the rear of vehicle 1000. The battery 100 can be used to power the vehicle 1000, for example, the battery 100 can serve as an operating power source for the vehicle 1000. The vehicle 1000 can also include a controller 200 and a motor 300, wherein the controller 200 is used to control the battery 100 to supply power to the motor 300, for example, for the operating electrical needs of vehicle 1000 for starting, navigating, and travelling.

In some embodiments of the present disclosure, the battery 100 not only can serve as an operating power source for the vehicle 1000, but also can serve as a driving power source for the vehicle 1000, so as to replace or partially replace fuel oil or natural gas to provide driving power for the vehicle 1000.

In the present disclosure, battery 100 refers to a single physical module that includes one or more battery cells 20 to provide higher voltage and capacity. The battery 100 generally includes a case body 10 for encapsulating one or more battery cells 20. The case body 10 can prevent liquids or other foreign objects from interfering with the charging or discharging of the battery cells 20.

Referring to Fig. 2, Fig. 2 is an exploded view of the battery 100 provided by some embodiments of the present disclosure, the battery 100 can include a case body 10 and battery cells 20, and the battery cells 20 are accommodated in case body 10. The case bosy 10 is used to house the battery cells 20, wherein case body 10 can be of various configurations. In some embodiments, the case body 10 can include a first portion 11 and a second portion 12, wherein the first portion 11 and the second portion 12 are capped to each other. An accommodating space 13 for containing the battery cells 20 is defined by the first portion 11 and the second portion 12 together. The second portion 12 can be of a hollow structure with an opening at one end, and the first portion 11 is of a plate-like structure, wherein the first portion 11 is capped to the open side of the second portion 12 to form the case body 10 with an accommodating space 13. The first portion 11 and the second portion 12 can also both be of hollow structures having one open side, wherein the open side of the first portion 11 is capped on the open side of the second portion 12 to form the case body 10 with the accommodating space 13. Certainly, the first portion 11 and the second portion 12 can be of a variety of shapes, such as cylinder, cuboid, etc.

In battery 100, the battery cell 20 can be one or more. When a plurality of battery cells 20 are provided, the plurality of battery cells 20 can be connected in series, in parallel, or in hybrid, wherein the hybrid connection means that the plurality of battery cells 20 are connected both in series and in parallel. The plurality of battery cells 20 can be directly connected together in series or in parallel or in hybrid, and then a pack formed by the plurality of battery cells 20 is accommodated in case body 10. It is also possible that the plurality of battery cells 20 are first connected in series or in parallel or in hybrid to form a module, and the plurality of modules are then connected in series or in parallel or in hybrid to form a pack to be housed in the case body 10. The battery 100 can also include other structures, for example, the plurality of battery cells 20 can be electrically connected to each other by means of a busbar component to realize parallel or series or hybrid connection of the plurality of battery cells 20.

Each battery cell 20 can be a secondary battery or a primary battery; or can also be a lithium-sulfur battery, a sodium-ion battery, or a magnesium-ion battery, but is not limited thereto.

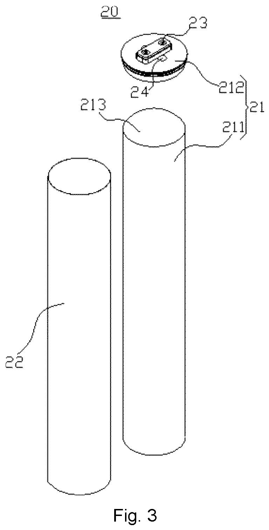

Referring to Fig. 3, Fig. 3 is an exploded view of the battery cell 20 shown in Fig. 2. The battery cell 20 is the smallest unit that makes up the battery 100. The battery cell 20 can include a housing 21, an electrode assembly 22, and an electrolyte solution, wherein both the electrode assembly 22 and the electrolyte solution are contained in the housing 21.

The housing 21 can include a housing body 211 and a cover body 212.The housing body 211 is a component for fitting the cover body 212 to form an internal sealing space 213 of the battery cell 20, wherein the formed sealing space 213 can be used to accommodate the electrode assembly 22, the electrolyte solution, and other components. The cover body 212 refers to a component that covers the opening of the housing body 211 to isolate the internal environment of the battery cell 20 from the external environment, wherein the shape of the cover body 212 can be adapted to the shape of the housing body 211 to match with the housing body 211, and the cover body 212 can be provided with functional components such as electrode terminals 23, pressure relief structures 24, and the like. A sealing ring can be configured between the opening of the housing body 211 and the cover body 212 for realizing a sealing between the housing body 211 and the cover body 212.

The housing body 211 and the cover body 212 can be of a variety of shapes and a variety of sizes, such as cuboid, cylinder, hexagonal prism, and the like. Specifically, the shape of the housing body 211 and the cover body 212 can be determined based on the specific shape and size of the electrode assembly 22. The housing body 211 and cover body 212 can be made of a variety of materials, which can be but are not limited to metals such as copper, iron, aluminum, stainless steel, aluminum alloy, etc. The sealing ring can be made of a variety of materials, which can be, but are not limited to, PP (polypropylene), PC (polycarbonate), PET (polyethylene terephthalate), and other materials that are resistant to corrosion by electrolyte solution and have high toughness and fatigue resistance. The outer surface of the housing body 211 can be provided with a plating, wherein the plating can be made of, but is not limited to, a variety of corrosion-resistant materials, such as Ni, Cr, etc.

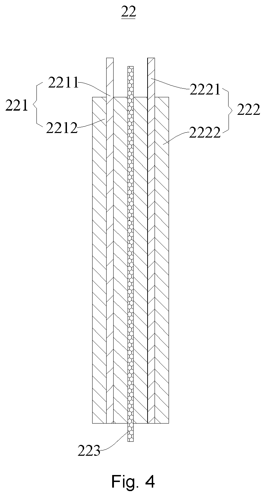

Referring to Fig. 4, the electrode assembly 22 can be made of a positive electrode plate 221, a negative electrode plate 222, and a separator 223. The battery cell 20 operates primarily based on the movement of metal ions between the positive electrode plate 221 and the negative electrode plate 222. The material of the separator 223 can be PP (polypropylene) or PE (polyethylene), etc. The positive electrode plate 221 includes a positive electrode current collector 2211 and a positive electrode active substance layer 2212. Taking the lithium-ion battery cell 20 as an example, the material of the positive electrode current collector 2211 can be aluminum, and the main component in the positive electrode active substance layer 2212 is a positive electrode active material. The negative electrode plate 222 includes a negative electrode current collector 2221 and a negative electrode active substance layer 2222, wherein the material of the negative electrode current collector 2221 can be copper, and the negative electrode active substance material in the negative electrode active substance layer 2222 can be carbon, silicon, and the like. In addition, the electrode assembly 22 can be a coiled structure or a laminated structure, and embodiments of the present disclosure are not limited thereto.

The electrically conductive compound and the preparation method thereof proposed in the embodiments of the present disclosure will be described next in detail in connection with the drawings.

In the first aspect, the present disclosure provides a positive electrode active material including a low-to-medium nickel ternary material and a high-lattice-volume-change positive electrode material. The mass ratio W1 of the low-to-medium nickel ternary material in the positive electrode active material is W≥45%, and the low-to-medium nickel ternary material is LiNiₓCo_{y}M1_{1-x-y}O₂, wherein 0.5≤x≤0.69, y>0, and 1-x-y>0, and M1 is selected from one or more of Al, Mn, Mg, Nb, Ti, and Ba. The high-lattice-volume-change positive electrode materials satisfy that the thickness change rate of the positive electrode active substance layer 2212 can be ≥2.6%, wherein the thickness change rate is (H₁-H₂)/H₁, H₁ is the fully discharged thickness of the positive electrode active substance layer 2212, and H₂ is the fully charged thickness of the positive electrode active substance layer 2212.

High-lattice-volume-change positive electrode materials are positive electrode materials with a higher lattice volume change rate, such as a lattice volume change rate of ≥3.5%. The lattice volume change rate of the high-lattice-volume-change positive electrode material is (V₁-V₂)/V₁, where V₁ is the fully discharged volume of the high-lattice-volume-change positive electrode material, and V₂ is the fully charged volume of the high-lattice-volume-change positive electrode material. The fully discharged volume of the high-lattice-volume-change positive electrode material refers to the volume of the high-lattice-volume-change positive electrode material when the positive electrode plate 221 is in the theoretically fully discharged lithium-intercalation state. The fully charged volume of the high-lattice-volume-change positive electrode material refers to the volume of the high-lattice-volume-change positive electrode material when the positive electrode plate 221 is in the theoretically fully charged delithiated state.

The fully discharged thickness of the positive electrode active substance layer 2212 refers to the thickness of the positive electrode active substance layer 2212 when the positive electrode plate 221 is in a theoretically fully discharged lithium-intercalation state. The fully charged thickness of the positive electrode active substance layer 2212 refers to the thickness of the positive electrode active substance layer 2212 when the positive electrode plate 221 is in a theoretically fully charged delithiated state.

Full charging and full discharging correspond to the upper and lower limits of the voltage range of the battery cell 20 in actual use. The battery cell 20 can be assembled using negative electrode plates 222 (e.g., lithium titanate, hard carbon, etc.) with zero expansion force during testing, and the thicknesses of the battery cell 20 can be tested using a high-precision thickness testing device to determine H₁ and H₂.

In the present disclosure, as an example, the low-to-medium nickel ternary material satisfies: Dv50 is of 2µm-8µm, and/or a specific surface area is 0.4m²/g-1.5m²/g.

In the technical solution of an embodiment of the present disclosure, in cases where the low-to-medium nickel ternary material is the main component, a high-lattice-volume-change positive electrode material is added for compounding, and the high-lattice-volume-change positive electrode material is required according to the criterion that the thickness change rate of the positive electrode active substance layer 2212 is ≥2.6%, so that the positive electrode active material as a whole has a better cyclic expansion force performance, thereby effectively improving the cyclic expansion force performance of the battery cell 20 and effectively increasing the cycle life of the battery cell 20.

In some embodiments, the high-lattice-volume-change positive electrode material comprises one or more of a high nickel ternary material and a polyanion-type positive electrode material. The high nickel ternary material is LiNiₘCoₙN₁₋ₘ₋ₙO₂, wherein 0.7≤m<1, and the N is selected from one or more of Al, Mn, Mg, and Ba. The polyanion-type positive electrode material is a lithium iron phosphate material or lithium manganese phosphate material.

The chemical formula of lithium iron phosphate material is LiFe_{α}M2_{β}PO₄, wherein M2 refers to metal elements, wherein α+β=1, 0<α≤1, 0≤β<1, the chemical formula of the lithium iron phosphate material can or cannot contain the element M2. As an example, α=1, i.e., the chemical formula of the lithium iron phosphate material is LiFePO4.

The chemical formula of lithium manganese phosphate material is Li₁₊ₑMn_{1-f}A_{f}P_{1-g}R_{g}O₄, wherein A refers to metallic elements and R refers to non-metallic elements, wherein e≥0, 0<1-f≤1, 0<1-g≤1, and the chemical formula of the lithium manganese phosphate material can or cannot contain element A and/or element R. As an example, e=0, A refers to Fe, and 1-g=1, i.e., the chemical formula of the lithium manganese phosphate material is LiMn_{1-f}Fe_{f}PO₄; optionally, 0.2≤1-f≤0.8.

In the present disclosure, as an example, the high nickel ternary material comprises one or more of primary particles and secondary spheres. The primary particles satisfy: Dv50 is of 2µm-8µm, and/or specific surface area is of 0.4m²/g-1.5m²/g; and the secondary spheres satisfy: Dv50 is of 5µm-10µm, and/or specific surface area is of 0.2m²/g-0.8m²/g.

In the present disclosure, as examples, the polyanion-type positive electrode material satisfies: Dv50 is of 0.3µm-12µm, and/or specific surface area is 0.5m²/g-20m²/g.

In the embodiment, the high-lattice-volume-change positive electrode material has a specific composition of species, such that the high-lattice-volume-change positive electrode material has a suitable lattice volume change rate, which better ensures the cyclic expansion force performance of the overall positive electrode active material, thereby more effectively improving the cyclic expansion force performance of the battery cell 20 and effectively increasing the cycle life of the battery cell 20.

In some embodiments, the chemical formula of the lithium iron phosphate material is LiFe_{α}M2_{β}PO₄, wherein α+β=1, 0.2≤α≤1, 0≤β≤0.8, and M2 is selected from one or more of Ti, Mg, V, Cr, Zr, Nb, and W.

In the embodiment, the lithium iron phosphate material has a specific elemental composition, and in cases where the lithium iron phosphate material is contained in the high-lattice-volume-change positive electrode material, the high-lattice-volume-change positive electrode material is made to have a suitable lattice volume change rate to better ensure the overall cyclic expansion force performance of the positive electrode active material, thereby improving the cyclic expansion force performance of the battery cell 20 more effectively and effectively improving the cyclic life of the battery cell 20.

In some embodiments, the chemical formula of the lithium manganese phosphate material is Li₁₊ₑMn_{1-f}A_{f}P_{1-g}R_{g}O₄, wherein 0.1≤e<1, 0.001≤f≤0.5, 0.001≤g≤0.1, A is selected from one or more of Zn, Al, Na, K, Mg, Mo, W, Ti, V, Zr, Fe, Ni, Co, Ga, Sn, Sb, Nb and Ge, and R is selected from one or more of B, Si, N, S, F, Cl, and Br. Optionally, A is selected from one or more of Fe, Ti, V, Ni, Co, and Mg. Optionally, R is selected from one or more of B, Si, N, and S.

In the embodiment, the lithium manganese phosphate material has a specific elemental composition, and in cases where the lithium manganese phosphate material is contained in the high-lattice-volume-change positive electrode material, the high-lattice-volume-change positive electrode material is made to have a suitable lattice volume change rate to better ensure the overall cyclic expansion force performance of the positive electrode active material, thereby improving the cyclic expansion force performance of the battery cell 20 more effectively and increasing the cyclic life of the battery cell 20 effectively.

In some embodiments, the surface of the polyanion-type positive electrode material has one or more electrically conductive cladding layers. Optionally, each electrically conductive cladding layer contains one of pyrophosphate, phosphate, and carbon.

The polyanion-type positive electrode material is in the form of a core-shell structure, with a core portion of the lithium iron phosphate material or lithium manganese phosphate material in the above embodiment, and its housing body 211 is the electrically conductive cladding layer.

As an example, the surface of the polyanion-type positive electrode material has one carbon conductive cladding layer.

In the embodiment, one or more electrically conductive cladding layers are provided on the surface of the polyanion-type positive electrode material, such that the polyanion-type positive electrode material has better stability and electrical conductivity.

In some embodiments, the positive electrode active material consists of a low-to-medium nickel ternary material and a high nickel ternary material, wherein the mass percentage W2 of the high nickel ternary material in the positive electrode active material satisfies: 0<W2≤50%; optionally, 10%<W2≤40%.

W2 is optionally any one of 10%, 20%, 30%, 40%, and 50% or a range of values between any two therefrom.

In the embodiment, the low-to-medium nickel ternary materials and the high nickel ternary materials are used to form the positive electrode active material and are controlled in accordance with an appropriate ratio, which better ensures the cyclic expansion force performance of the positive electrode active material as a whole, thereby more effectively improving the cyclic expansion force performance of the battery cell 20 and effectively increasing the cycle life of the battery cell 20.

In some embodiments, the positive electrode active material consists of a low-to-medium nickel ternary material and a polyanion-type positive electrode material, and the mass percentage W3 of the polyanion-type positive electrode material in the positive electrode active material satisfies 0<W3≤50%. Optionally, 10%<W3≤30%.

W3 is optionally any one of 2%, 3%, 5%, 10%, 20%, 30%, 40%, and 50% or a range of values between any two therefrom.

In the embodiment, the low-to-medium nickel ternary material and the polyanion-type positive electrode material are used to form the positive electrode active material and are controlled according to an appropriate ratio, which better ensures the cyclic expansion force performance of the overall positive electrode active material, thereby more effectively improving the cyclic expansion force performance of the battery cell 20 and effectively increasing the cycle life of the battery cell 20.

In some embodiments, the positive electrode active material is composed of a low-to-medium nickel ternary material, a high nickel ternary material, and a polyanion-type positive electrode material, where 50%≤W1<100%. Optionally, the mass percentage W2 of the high nickel ternary material in the positive electrode active material satisfies: 0<W2≤40%; and the mass percentage W3 of the polyanion-type positive electrode material in the positive electrode active material satisfies: 5%≤W3≤30%.

Optionally, W2 is any one of 40%, 41%, 42%, 43%, 44%, 45%, 46%, 47%, 48%, 49%, and 50% or a range of values between any two therefrom; Optionally, W3 is any one of 1%, 2%, 3%, 4%, 5%, 6%, 7%, 8%, 9%, and 10% or a range of values between any two therefrom.

In the embodiment, the positive electrode active material is composed of the low-to-medium nickel ternary materials, the high nickel ternary materials, and the polyanion-type positive electrode materials, and these three are controlled according to an appropriate ratio, which better ensures the cyclic expansion force performance of the overall positive electrode active material, thereby more effectively improving the cyclic expansion force performance of the battery cell 20 and effectively increasing the cycle life of the battery cell 20.

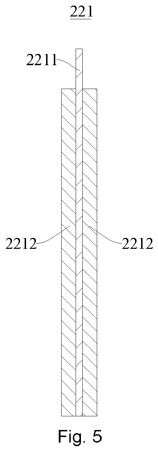

Referring to Fig. 5, in a second aspect, the present disclosure provides a positive electrode plate 221, comprising a positive electrode current collector 2211 and a positive electrode active substance layer 2212 disposed on at least one side of the positive electrode current collector 2211, wherein the material of the positive electrode active substance layer 2212 comprises a positive electrode active material in the above embodiment.

In the positive electrode plate 221, the positive electrode active materials of the above embodiments can be mixed and then coated to form the positive electrode active substance layer 2212, or, each component can be coated individually to form the positive electrode active substance layer 2212 with a multilayer structure.

When the positive electrode active material is mixed together and coated to form the positive electrode active substance layer 2212, as an example, the positive electrode active material, the electrically conductive agent, and the bonding agent are compounded in a ratio with a mass percentage of 95%-99%, 0.4%-2.0%, and 0.6%-2.4%, respectively, wherein the electrically conductive agent is, for example, electrically conductive carbon black, and the bonding agent is, for example, polyvinylidene fluoride (PVDF).

When each component is individually coated to form the positive electrode active substance layer 2212 with a multilayer structure, as an example, the low-to-medium nickel ternary material is coated on the surface of the positive electrode current collector 2211 to form a low-to-medium nickel ternary material layer, and the high-lattice-volume-change positive electrode material is coated on the surface of the low-to-medium nickel ternary material layer to form a high-lattice-volume-change positive electrode material layer.

The positive electrode active substance layer 2212 is optionally coated on the surface of the positive electrode current collector 2211 by means of a positive electrode slurry, wherein a coating amount weighed after the coating is, for example, 13-32g/cm².

In the third aspect, the present disclosure provides an electrode assembly 22, comprising a positive electrode plate 221 of the above embodiment.

In the fourth aspect, the present disclosure provides a battery cell 20, comprising a housing 21 and an electrode assembly 22 of the above embodiment, wherein the electrode assembly 22 is accommodated in the housing 21.

In the fifth aspect, the present disclosure provides a battery 100, comprising a case body 10 and a plurality of battery cells 20 of the above embodiment, wherein the plurality of battery cells 20 are accommodated in the case body 10.

In the sixth aspect, the present disclosure provides an electrical apparatus, comprising battery cells 20 of the above embodiment or a battery 100 of the above embodiment.

According to some embodiments of the present disclosure, the positive electrode active material comprises a low-to-medium nickel ternary material and a high-lattice-volume-change positive electrode material, wherein the high-lattice-volume-change positive electrode material comprises a high nickel ternary material and/or a polyanion-type positive electrode material.

Some specific embodiments are listed below to better illustrate the present disclosure.

### I. Preparation of battery cell

Preparation of positive electrode plate: the positive electrode active material was prepared according to the composition in Table 1. The positive electrode active material, the electrically conductive carbon black, and the bonding agent PVDF were compounded in a ratio with a mass percentage of 96%-98%, 1.4%-2%, and 1.2%-2%, respectively, an appropriate amount of N-methylpyrrolidone (NMP) was added, and the resultant was dispersed in a high-speed disperser until the viscosity was 5000mPa·S-15000mPa·S, so as to obtain the positive electrode slurry. The above-mentioned positive electrode slurry was uniformly coated on an aluminum foil current collector with a thickness of 13µm, the coating amount was 18-22g/cm², then the positive electrode plate was obtained after drying, roller pressing, and slitting.

Preparation of negative electrode plate: the negative electrode active material graphite, the thickener sodium carboxymethyl cellulose, the adhesive styrene butadiene rubber, and the conductive agent acetylene black were mixed according to the mass ratio of 97:1:1:1, and deionized water was added, then the negative electrode slurry was obtained under the action of a vacuum mixer. The above-mentioned negative electrode slurry was uniformly coated on a copper foil with a thickness of 8µm, and the coating amount was 8-12g/cm², and the negative electrode plate was obtained by cold pressing and slitting after drying.

Preparation of electrolyte solution: the organic solvent used was a mixed liquid containing ethylene carbonate (EC), ethyl methyl carbonate (EMC), and diethyl carbonate (DEC), wherein the concentration of LiPF₆ was 1mol/L.

Preparation of lithium-ion batteries: the positive electrode plate, the separator, and the negative electrode plate were put into the winding equipment in sequence, so that the separator was inserted between the positive electrode plate and the negative electrode plate. The resultant was wound into a square electrode assembly, and loaded into an aluminum square shell, and then baked at high temperature to remove water. The corresponding electrolyte solution was injected and the opening was sealed, and then the lithium-ion batteries were obtained after the process of standing, hot pressing and cold pressing, battery formation, fixture, capacity grading, etc.

In each example and control group, the material information corresponding to each positive electrode material abbreviation is as follows.

Material A represents low-to-medium nickel ternary materials; Material B represents high nickel ternary materials in high-lattice-volume-change positive electrode materials; and Material C represents polyanion-type positive electrode materials in high-lattice-volume-change positive electrode materials.

Material A-1 represents a kind of material A, whose expression is LiNiₓCo_{y}Mn_{1-x-y}O₂, wherein x = 0.55, y = 0.12, Dv50 is 4.1 µm and BET is 0.6m²/g.

Material A-2 represents a kind of material A, whose expression is LiNiₓCo_{y}Mn_{1-x-y}O₂, wherein x = 0.55, y = 0.06, Dv50 is 3.5µm and BET is 0.8m²/g.

Material A-3 represents a kind of material A, whose expression is LiNiₓCo_{y}Mn_{1-x-y}O₂, wherein x = 0.50, y = 0.3, Dv50 is 3.6µm and BET is 1.3m²/g.

Material A-4 represents a kind of material A, whose expression is LiNiₓCo_{y}Mn_{1-x-y}O₂, wherein x = 0.65, y = 0.2, Dv50 is 3.5µm and BET is 1.13m²/g.

Material B-1 represents a kind of material B, whose expression is LiNiₘCoₙMn₁₋ₘ₋ₙO₂, wherein m = 0.70, n = 0.06, Dv50 is 3.8µm and BET is 1.0m²/g.

Material B-2 represents a kind of material B, whose expression is LiNiₘCoₙMn₁₋ₘ₋ₙO₂, wherein m = 0.80, n = 0.12, Dv50 is 9.2µm and BET is 0.4m²/g.

Material B-3 represents a kind of material B, whose expression is LiNiₘCoₙMn₁₋ₘ₋ₙO₂, wherein m = 0.90, n = 0.03, Dv50 is 7.3µm and BET is 0.5m²/g.

Material C-1 represents a kind of material C, whose expression is LiFePO4, wherein Dv50 is 7.5µm and BET is 8m²/g.

Material C-2 represents a kind of material C, whose expression is LiFe_{f}Mn_{1-f}PO4, wherein f=0.4, Dv50 is 0.6µm and BET is 20m²/g.

Material C-3 represents a kind of material C, which indicates that the material C is a lithium ferromanganese phosphate material, whose expression is LiFe_{f}Mn_{1-f}PO4, wherein f=0.3, Dv50 is 8.6µm and BET is 0.8m²/g.

### II. Testing battery cells

### (1) Testing process

The electrode assemblies in each group of the experiment were controlled to have the same thickness after hot pressing and the housing bodies were consistent.
Test environment: room temperature (25°C) and atmospheric pressure.
Housing body: aluminum hard housing.
Charging process: 0%SOC-100%SOC, charging at 0.33C constant current.
Discharge process: 0%SOC-100%SOC, discharging at 1C constant current.

### (2) Acquisition of cyclic expansion force property

The cyclic expansion force property is characterized by the "cyclic expansion force increase", wherein the "cyclic expansion force increase" calculation formula of the cyclic expansion force increase is γ/δ-1, where γ is the maximum expansion force when the cycling capacity of battery cell decays to 80%, and δ is the maximum expansion force of the battery cell cycling in the first 3 cycles. When γ/δ-1≤50%, cyclic expansion force property is taken as "excellent"; when 50% < γ/δ-1≤ 100%, cyclic expansion force property is taken as "good"; when 100% < γ/δ-1≤ 150%, cyclic expansion force property is taken as "moderate"; and when 150%<γ/δ-1, cyclic expansion force property is taken as "poor".

### (3) Acquisition of cycle life

The cycle life is characterized by "cycle life improvement", wherein the cycle life improvement is calculated by the formula α'/β'-1, wherein α' is the number of cycling when the cycle capacity in the experimental group (any example and control group other than Control Group 1) decays to 80%, and β' is the number of cycling when the cycle capacity in the control group (Control Group 1) decays to 80%.

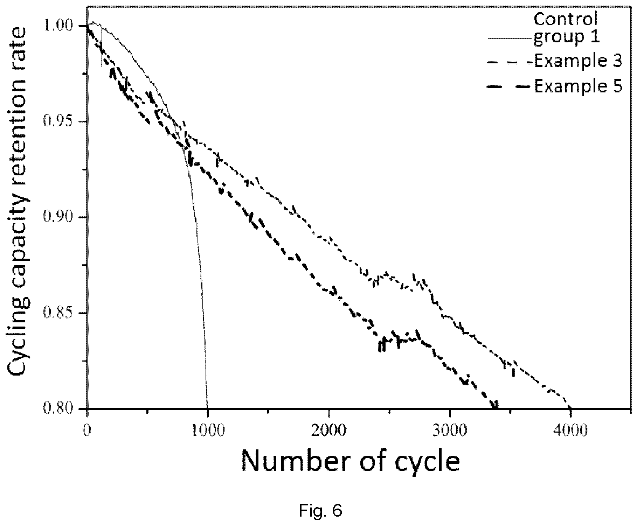

The test curve of cycling capacity retention rate and the number of cycling of the battery cells provided by some examples and the control group is shown in Fig. 6, and the cyclic expansion force performance and cycle life of the battery cells provided by each example and control group are shown in Table 1.

**Table 1. The results of positive electrode active material compositions and the performance test of battery cells**

| Group | Type | Material A | Material B | Material C | (H₁-H₂)/H₁ | Cyclic voltage range | Increase of cyclic expansion force | Cycle life improvement to Control Group 1 |
|---|---|---|---|---|---|---|---|---|
| Control group 1 | Main material | Material A-1 | / | / | 2.23% | 2.8V-4.4V | poor | 0 |
| | Proportion | 100wt% | / | / | | | | |
| Control group 2 | Main material | Material A-2 | / | / | 2.28% | 2.8V-4.4V | poor | 11% |
| | Proportion | 100wt% | | | | | | |
| Example 1 | Main material | Material A-1 | / | Material C-1 | 2.62% | 2.8V-4.4V | good | 153% |
| | Proportion | 98wt% | / | 2wt% | | | | |
| Example 2 | Main material | Material A-2 | / | Material C-1 | 2.66% | 2.8V-4.4V | good | 171% |
| | Proportion | 97wt% | | 3wt% | | | | |
| Example 3 | Main material | Material A-1 | / | Material C-1 | 2.92% | 2.8V-4.4V | excellent | 302% |
| | Proportion | 90wt% | / | 10wt% | | | | |
| Example 4 | Main material | Material A-1 | / | Material C-1 | 3.35% | 2.8V-4.4V | good | 238% |
| | Proportion | 80wt% | / | 20wt% | | | | |
| Example 5 | Main material | Material A-1 | / | Material C-1 | 3.78% | 2.8V-4.4V | moderate | 221% |
| | Proportion | 70wt% | / | 30wt% | | | | |
| Example 6 | Main material | Material A-1 | / | Material C-1 | 4.21% | 2.8V-4.4V | moderate | 50% |
| | Proportion | 60wt% | / | 40wt% | | | | |
| Example 7 | Main material | Material A-3 | / | Material C-1 | 3.08% | 2.8V-4.4V | good | 235% |
| | Proportion | 90wt% | / | 10wt% | | | | |
| Example 8 | Main material | Material A-4 | / | Material C-1 | 2.80% | 2.8V-4.4V | moderate | 169% |
| | Proportion | 90wt% | / | 10wt% | | | | |
| Example 9 | Main material | Material A-1 | / | Material C-2 | 2.91% | 2.5V-4.3V | good | 19% |
| | Proportion | 90wt% | / | 10wt% | | | | |
| Example 10 | Main material | Material A-1 | / | Material C-2 | 3.33% | 2.5V-4.3V | good | 67% |
| | Proportion | 80wt% | / | 20wt% | | | | |
| Example 11 | Main material | Material A-1 | / | Material C-2 | 3.75% | 2.5V-4.3V | good | 112% |
| | Proportion | 70wt% | / | 30wt% | | | | |
| Example 12 | Main material | Material A-1 | / | Material C-2 | 4.17% | 2.5V-4.3V | moderate | 45% |
| | Proportion | 60wt% | / | 40wt% | | | | |
| Example 13 | Main material | Material A-1 | / | Material C-2 | 4.60% | 2.5V-4.3V | moderate | 13% |
| | Proportion | 50wt% | / | 50wt% | | | | |
| Example 14 | Main material | Material A-1 | / | Material C-3 | 2.91% | 2.8V-4.4V | moderate | 87% |
| | Proportion | 90wt% | / | 10wt% | | | | |
| Example 15 | Main material | Material A-1 | / | Material C-3 | 3.33% | 2.8V-4.4V | moderate | 132% |
| | Proportion | 80wt% | / | 20wt% | | | | |
| Example 16 | Main material | Material A-1 | Material B-1 | / | 2.62% | 2.8V-4.4V | good | 122% |
| | Proportion | 90wt% | 10wt% | / | | | | |
| Example 17 | Main material | Material A-1 | Material B-1 | / | 2.75% | 2.8V-4.4V | good | 153% |
| | Proportion | 80wt% | 20wt% | / | | | | |
| Example 18 | Main material | Material A-1 | Material B-1 | / | 2.88% | 2.8V-4.4V | excellent | 192% |
| | Proportion | 70wt% | 30wt% | / | | | | |
| Example 19 | Main material | Material A-1 | Material B-1 | / | 3.15% | 2.8V-4.4V | excellent | 156% |
| | Proportion | 50wt% | 50wt% | / | | | | |
| Example 21 | Main material | Material A-1 | Material B-2 | / | 3.45% | 2.8V-4.4V | excellent | 124% |
| | Proportion | 50wt% | 50wt% | / | | | | |
| Example 22 | Main material | Material A-1 | Material B-3 | / | 3.65% | 2.8V-4.4V | excellent | 222% |
| | Proportion | 50wt% | 50wt% | / | | | | |
| Example 23 | Main material | Material A-1 | Material B-1 | Material C-1 | 3.96% | 2.8V-4.4V | excellent | 227% |
| | Proportion | 45wt% | 45wt% | 10wt% | | | | |
| Example 24 | Main material | Material A-2 | Material B-1 | Material C-1 | 3.62% | 2.8V-4.4V | excellent | 187% |
| | Proportion | 48.5wt% | 48.5wt% | 3wt% | | | | |
| Example 25 | Main material | Material A-4 | Material B-3 | Material C-2 | 3.13% | 2.8V-4.4V | good | 116% |
| | Proportion | 48.5wt% | 48.5wt% | 3wt% | | | | |

According to Fig. 1 and Table 1, comparing to the control groups in which only low-to-medium nickel ternary material is used, it can be seen that when the positive electrode active material provided by the embodiments of the present disclosure (predominantly based on the low-to-medium nickel ternary materials and in conjunction with the high-lattice-volume-change positive electrode materials) is applied to the battery cell, the cyclic expansion force performance and the cycle life of the battery cell are both improved.

According to Examples 1 to 15, in cases where the positive electrode active material is made of low-to-medium nickel ternary material and a polyanion-type positive electrode material, when the proportion of the polyanion-type positive electrode material is ≤50%, the cyclic expansion force performance and the cycle life of the battery cells are effectively improved compared to the control groups.

According to Examples 16 to 22, in cases where the positive electrode active material is made of low-to-medium nickel ternary materials and high nickel ternary materials, when the proportion of high nickel ternary materials is ≤50%, the cyclic expansion force performance and the cycle life of the battery cell are effectively improved compared to the control group.

According to the comparison among Examples 1 to 6, the comparison among Examples 9 to 13, and comparison among Examples 16 to 19, it can be seen that since the cyclic expansion force performance and the cycle life will be affected by factors such as the high-lattice-volume-change positive electrode material and the production of gas, the content of the high-lattice-volume-change positive electrode material will have an impact on the cyclic expansion force performance and the cycle life. In the present disclosure, in particular, when the content of the high-lattice-volume-change positive electrode material is in the range of 10-30%, the cyclic expansion force performance and the cycle life of the battery cells are both improved more effectively.

According to Examples 23 to 25, in cases where the positive electrode active material is composed of low-to-medium nickel ternary materials, high nickel ternary materials, and polyanion-type positive electrode materials, when the proportion of the high nickel ternary materials is <50% and the proportion of the polyanion-type positive electrode materials is <50% (in particular, when the proportion of the high nickel ternary materials is 40%-50% and the proportion of the polyanion-type positive electrode materials is ≤10%), the cyclic expansion force performance and the cyclic life of the battery cells are both effectively improved compared to the control groups.

A final note should be made as follows. The above embodiments are only used to illustrate the technical solutions of the present disclosure and are not intended to be a limitation thereof. Although the present disclosure has been described in detail with reference to the foregoing embodiments, a person of ordinary skill in the art should understand that it is still possible to modify the technical solutions recorded in the foregoing embodiments or to make equivalent substitutions for some or all of the technical features therein. These modifications or substitutions do not take the essence of the corresponding technical solutions out of the scope of the technical solutions of the embodiments of the present disclosure, which shall be covered by the scope of the claims and specification of the present disclosure. In particular, each of the technical features referred to in the various embodiments can be combined in any manner as long as there is no structural conflict. The present disclosure is not limited to the particular embodiments disclosed herein but includes all technical solutions falling within the scope of the claims.

## Claims

1. A positive electrode active material, wherein the positive electrode active material comprises a low-to-medium nickel ternary material and a high-lattice-volume-change positive electrode material, wherein
the low-to-medium nickel ternary material has a mass ratio W1≥45% in the positive electrode active material, and the low-to-medium nickel ternary material is LiNiₓCo_{y}M1_{1-x-y}O₂, wherein 0.5≤x≤0.69, y>0, 1-x-y>0, and M1 is selected from one or more of Al, Mn, Mg, Nb, Ti, and Ba; and
the high-lattice-volume-change positive electrode material satisfies a thickness change rate of a positive electrode active substance layer being ≥2.6%, wherein the thickness change rate is (H₁-H₂)/H₁, wherein H₁ is a fully discharged thickness of the positive electrode active substance layer, and H₂ is a fully charged thickness of the positive electrode active substance layer.

2. The positive electrode active material according to claim 1, wherein the high-lattice-volume-change positive electrode material comprises one or more of a high nickel ternary material and a polyanion-type positive electrode material, wherein
the high nickel ternary material is LiNiₘCoₙN₁₋ₘ₋ₙO₂, wherein 0.7≤m<1, and N is selected from one or more of Al, Mn, Mg, and Ba; and
the polyanion-type positive electrode material is a lithium iron phosphate material or a lithium manganese phosphate material.

3. The positive electrode active material according to claim 2, wherein a chemical formula of the lithium iron phosphate material is LiFe_{α}M2_{β}PO₄, wherein α+β=1, 0.2≤α≤1, 0≤β≤0.8, and M2 is selected from one or more of Ti, Mg, V, Cr, Zr, Nb and W.

4. The positive electrode active material according to claim 2, wherein a chemical formula of the lithium manganese phosphate material is Li₁₊ₑMn_{1-f}A_{f}P_{1-g}R_{g}O₄, wherein 0.1≤e<1, 0.001≤f≤0.5, 0.001≤g≤0.1, A is selected from one or more of Zn, Al, Na, K, Mg, Mo, W, Ti, V, Zr, Fe, Ni, Co, Ga, Sn, Sb, Nb, and Ge, and R is selected from one or more of B, Si, N, S, F, Cl, and Br;
optionally, A is selected from one or more of Fe, Ti, V, Ni, Co, and Mg; and
optionally, R is selected from one or more of B, Si, N, and S.

5. The positive electrode active material according to any one of claims 2 to 4, wherein a surface of the polyanion-type positive electrode material has one or more electrically conductive cladding layers; and
optionally, each of the electrically conductive cladding layers contains one of pyrophosphate, phosphate, and carbon.

6. The positive electrode active material according to claim 2, wherein the positive electrode active material consists of the low-to-medium nickel ternary material and the high nickel ternary material, wherein a mass percentage W2 of the high nickel ternary material in the positive electrode active material satisfies: 0<W2≤50%; and
optionally, 10%<W2≤40%.

7. The positive electrode active material according to any one of claims 2 to 5, wherein the positive electrode active material consists of the low-to-medium nickel ternary material and the polyanion-type positive electrode material, wherein a mass percentage W3 of the polyanion-type positive electrode material in the positive electrode active material satisfies: 0<W3≤50%; and
optionally, 10%<W3≤30%.

8. The positive electrode active material according to any one of claims 2 to 5, wherein the positive electrode active material consists of the low-to-medium nickel ternary material, the high nickel ternary material, and the polyanion-type positive electrode material, wherein 50%≤W1<100%;
optionally, a mass percentage W2 of the high nickel ternary material in the positive electrode active material satisfies: 0<W2≤40%; and a mass percentage W3 of the polyanion-type positive electrode material in the positive electrode active material satisfies: 5%≤W3≤30%.

9. A positive electrode plate, comprising a positive electrode current collector and a positive electrode active substance layer disposed on at least one side of the positive electrode current collector, wherein a material of the positive electrode active substance layer comprises the positive electrode active material according to any one of claims 1 to 8.

10. An electrode assembly, wherein the electrode assembly comprises a negative electrode plate, a separator, and the positive electrode plate according to claim 9 disposed in sequence.

11. A battery cell, wherein the battery cell comprises a housing and the electrode assembly according to claim 10, wherein
the electrode assembly is accommodated in the housing.

12. A battery, wherein the battery comprises a case body and the battery cell according to claim 11, wherein
the battery cell is accommodated in the case body.

13. An electrical apparatus, wherein the electrical apparatus comprises the battery cell according to claim 11 or the battery according to claim 12.
